# EUROPÄISCHE PATENTSCHRIFT

(11) **EP 0 783 688 B1**
(45) Veröffentlichungstag und Bekanntmachung des Hinweises auf die Patenterteilung: **09.12.1998**
(21) Anmeldenummer: 95929734.2
(22) Anmeldetag: 01.09.1995
(51) Int. Cl.: G01N 27/406, G01N 27/419

(54) **VERFAHREN UND SCHALTUNGSANORDNUNG ZUM ANSTEUERN EINES MESSFÜHLERS ZUM BESTIMMEN EINER SAUERSTOFFKONZENTRATION IN EINEM GASGEMISCH**
PROCESS AND CIRCUIT FOR CONTROLLING A MEASURING PROBE TO DETERMINE THE OXYGEN CONCENTRATION IN A GAS MIXTURE
PROCEDE ET CIRCUIT PERMETTANT D'ACTIONNER UNE SONDE POUR DETERMINER LA CONCENTRATION EN OXYGENE D'UN MELANGE GAZEUX

(30) Priorität: 24.09.1994 DE 4434194
(43) Veröffentlichungstag der Anmeldung: 16.07.1997
(73) Patentinhaber: ROBERT BOSCH GMBH, 70442 Stuttgart (DE)
(72) Erfinder: DIETZ, Hermann, D-70839 Gerlingen (DE); GRÜENWALD, Werner, D-70839 Gerlingen (DE)
(86) Internationale Anmeldenummer: DE9501181
(87) Internationale Veröffentlichungsnummer: WO9609536

(56) Entgegenhaltungen:
- EP-A- 0 427 958
- DE-A- 3 515 588
- DE-A- 4 304 966
- US-A- 4 891 122

## Beschreibung

### Stand der Technik

Meßfühler zum Bestimmen einer Sauerstoffkonzentration in Gasgemischen, insbesondere in Abgasen von Verbrennungskraftmaschinen, sind bekannt. Derartige Meßfühler dienen dazu, über die Bestimmung der Sauerstoffkonzentration in dem Abgas die Einstellung eines Kraftstoff-Luft-Gemisches zum Betreiben der Verbrennungskraftmaschine einzustellen. Das Kraftstoff-Luft-Gemisch kann im sogenannten fetten Bereich vorliegen, das heißt, der Kraftstoff liegt im stöchiometrischen Überschuß vor, so daß im Abgas nur eine geringe Menge an Sauerstoff gegenüber anderen teilweise unverbrannten Bestandteilen vorhanden ist. Im sogenannten mageren Bereich, bei dem der Sauerstoff der Luft in dem Kraftstoff-Luft-Gemisch überwiegt, ist eine Sauerstoffkonzentration in dem Abgas entsprechend hoch.

Bei einer stöchiometrischen Zusammensetzung des Kraftstoff-Luft-Gemisches sind sowohl der Kraftstoff als auch der Sauerstoff in dem Abgas reduziert.

Zur Bestimmung der Sauerstoffkonzentration im Abgas sind sogenannte λ-Sonden bekannt, die im mageren Bereich einen λ-Wert größer 1, im fetten Bereich einen λ-Wert kleiner 1 und im stöchiometrischen Bereich einen λ-Wert gleich 1 detektieren. Die λ-Sonde liefert hierbei in bekannter Weise eine Detektorspannung, die einer Schaltungsanordnung zugeführt wird. Mit Hilfe der Schaltungsanordnung wird bei bekannten Meßfühlern die Detektorspannung in eine Pumpspannung für eine Meßsonde transferiert, die ebenfalls Bestandteil des Meßfühlers und dem Abgas ausgesetzt ist. Die Meßsonde arbeitet dabei als Pumpzelle, bei der je nach vorliegender Sauerstoffkonzentration in dem zu messenden Gasgemisch Sauerstoffionen von einer ersten zu einer zweiten Elektrode der Meßsonde oder umgekehrt gepumpt werden. Je nachdem, ob die λ-Sonde einen fetten Bereich, also ein λ-Wert kleiner 1, oder einen mageren Bereich, also einen λ-Wert größer 1, detektiert, wird über die Schaltungsanordnung bestimmt, ob eine mit einem aktiven Eingang der Schaltungsanordnung verbundene Elektrode der Meßsonde als Kathode oder Anode geschaltet ist. Die zweite Elektrode der Meßsonde liegt gegen Masse, so daß sich an der Meßsonde entweder ein anodischer Grenzstrom, bei fettem Meßgas, oder ein kathodischer Grenzstrom, bei magerem Meßgas, einstellt. Bei stöchiometrischem Betrieb, also wenn der λ-Wert gleich 1 beträgt, liegt die Pumpspannung nahe 0, so daß kein Grenzstrom fließt.

Bei den bekannten Schaltungsanordnungen ist nachteilig, daß zum Erzeugen der positiven beziehungsweise negativen Pumpspannung eine Stromumkehrschaltung vorgesehen sein muß, die über die von der Referenzsonde gelieferte Detektionsspannung ansteuerbar ist. Ein derartiger Meßfühler ist beispielsweise aus der DE-PS 35 15 588 bekannt.

Aus US-A-4 891 122 ist ein Verfahren gemäß dem Oberbegriff des Anspruchs 1 bekannt.

### Vorteile der Erfindung

Das erfindungsgemäße Verfahren und die erfindungsgemäße Schaltungsanordnung mit den im Anspruch 1 und 4 genannten Merkmalen bietet demgegenüber den Vorteil, daß mit einfachsten Mitteln eine Pumpspannung zum Ansteuern der Meßsonde erzielbar ist. Dadurch, daß ein Verlauf der Detektorspannung unmittelbar zur Bestimmung des Verlaufs der Pumpspannung eingesetzt wird, wobei der Detektorspannung ein Spannungswert aufaddiert wird, der eine Verschiebung der Detektorspannung derart bewirkt, daß ein Sprungpunkt, das heißt, der Punkt, an dem ein Übergang von dem fetten in den mageren Bereich erfolgt, der Detektorspannung nahe dem Nullpunkt liegt, ist es mit einem einzigen Addierer möglich, die Detektionsspannung direkt zur Ansteuerung der Meßsonde als Pumpspannung zu verwenden. Aufwendige Stromumkehrschaltungen und Vergleichs- und Rückkoppelschaltungen entfallen. Durch die unmittelbare, das heißt direkte Abhängigkeit der Pumpspannung von der Detektorspannung, kommt es bei einer Verschiebung des mit der Referenzsonde ermittelten λ-Wertes zu einer automatischen Rückregelung der Pumpspannung, so daß der sich einstellende anodische oder kathodische Grenzstrom als Meßgröße direkt zur Ansteuerung einer das Mischungsverhältnis des Kraftstoff-Luft-Gemisches bereitstellenden Einrichtung verwendet werden kann. Durch die Verwendung von extrem wenig Bauteilen für die Schaltungsanordnung wird eine Fehlerabweichung bei der Bereitstellung der Pumpspannung weitgehend vermieden.

Weitere vorteilhafte Ausgestaltungen ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:
- Figur 1: ein elektrisches Ersatzschaltbild eines Meßfühlers;
- Figur 2: eine Schaltungsanordnung zum Ansteuern des Meßfühlers;
- Figur 3: den Verlauf einer benötigten Pumpspannung;
- Figur 4: den Verlauf einer gelieferten Detektorspannung;
- Figur 5: den Übergang von der gelieferten Detektorspannung in eine Zwischenspannung und
- Figur 6: den Verlauf der aus der Detektorspannung erzeugten Pumpspannung.

### Beschreibung des Ausführungsbeispiels

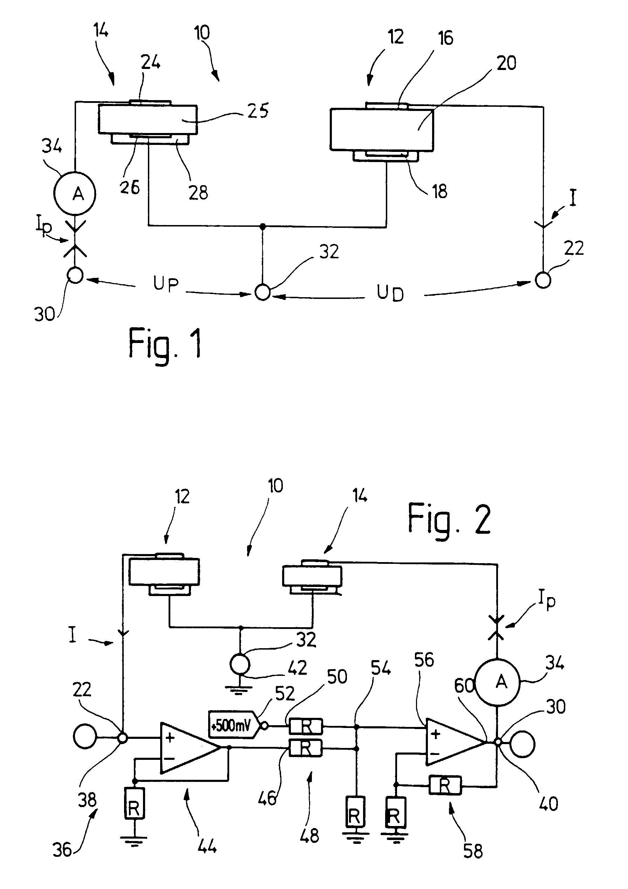

Figur 1 zeigt ein elektrisches Ersatzschaltbild eines allgemein mit 10 bezeichneten Meßfühlers zum Bestimmen einer Sauerstoffkonzentration in einem Gasgemisch. Derartige Meßfühler 10 werden beispielsweise zum Bestimmen der Sauerstoffkonzentration in Abgasen von Verbrennungskraftmaschinen eingesetzt, um ein Steuersignal zur Einstellung eines Kraftstoff-Luft-Gemisches, mit dem die Verbrennungskraftmaschine betrieben wird, zu erhalten. Der Meßfühler 10 besitzt eine Referenzsonde 12 und eine Meßsonde 14. Die Referenzsonde 12 weist eine erste Elektrode 16 und eine zweite Elektrode 18 auf, zwischen denen ein Festelektrolyt 20 angeordnet ist. Die Elektrode 16 ist hier dem zu messenden Gasgemisch ausgesetzt, während die Elektrode 18 einem Referenzgas, beispielsweise Luft, ausgesetzt ist. Der Festelektrolyt 20 besteht beispielsweise aus yttriumoxidstabilisiertem Zirkonoxid, während die Elektroden 16 und 18 beispielsweise aus Platin bestehen, die auf den Festelektrolyten 20 aufgesintert sind. Die Elektrode 16 der Referenzsonde 12 ist mit einem Anschluß 22 des Meßfühlers 10 verbunden.

Die Meßsonde 14 besteht aus einer ersten Elektrode 24 und einer zweiten Elektrode 26, zwischen denen ein Festelektrolyt 25 angeordnet ist. Die Elektrode 24 ist wiederum direkt dem zu messenden Gasgemisch ausgesetzt, während die Elektrode 26 über eine Diffusionsbarriere 28 ebenfalls dem Gasgemisch ausgesetzt ist. Der Festelektrolyt 25 besteht wiederum beispielsweise aus yttriumoxidstabilisiertem Zirkonoxid, auf den die Elektroden 24 und 26 als Platinschicht aufgebracht sind. Die Elektrode 24 ist mit einem zweiten Anschluß 30 des Meßfühlers 10 verbunden. Die Elektrode 18 der Referenzsonde 12 und die Elektrode 26 der Meßsonde 14 sind zusammengeschaltet und mit einem dritten Anschluß 32 des Meßfühlers 10 verbunden. Die Anschlüsse 22, 30 und 32 des Meßfühlers 10 sind mit einer in Figur 1 nicht dargestellten Schaltungsanordnung verbunden.

Nachfolgend soll die Funktion des in Figur 1 dargestellten Meßfühlers kurz erläutert werden:

Der Meßfühler 10 wird einem zu messenden Gasgemisch ausgesetzt, wobei dieses direkt an den Elektroden 16 der Referenzsonde 12 und 24 der Meßsonde 14 anliegt. Aufgrund der in dem zu messenden Gasgemisch vorhandenen Sauerstoffkonzentration stellt sich ein Sauerstoffkonzentrationsunterschied an den Elektroden 16 und 18 der Referenzsonde 12 ein. Die Referenzsonde 12 ist über den Anschluß 22 mit einer Stromquelle verbunden, die einen konstanten Strom I liefert. Aufgrund des vorhandenen Sauerstoffkonzentrationsunterschiedes stellt sich eine bestimmte Detektorspannung U_{D} ein. Die Referenzsonde 12 arbeitet hierbei als λ-Sonde, die detektiert, ob in dem Gasgemisch eine hohe Sauerstoffkonzentration oder eine niedrigere Sauerstoffkonzentration vorhanden ist. Anhand der Sauerstoffkonzentration ist klar, ob es sich bei dem Kraftstoff-Luft-Gemisch, mit dem die Verbrennungskraftmaschine betrieben wird, um ein fettes oder ein mageres Gemisch handelt. Bei einem Wechsel vom fetten in den mageren Bereich oder umgekehrt fällt die Detektorspannung U_{D} ab beziehungsweise steigt an. Beim Betrieb im stöchiometrischen Bereich, also bei einem λ-Wert gleich 1, hat die Detektorspannung U_{D} einen Sprungpunkt (Figur 4), der den Übergang vom mageren zum fetten Bereich beziehungsweise umgekehrt, charakterisiert.

Mit Hilfe der in Figur 1 nicht dargestellten Schaltungsanordnung wird die Detektorspannung U_{D} zum Ermitteln einer Pumpspannung U_{P} eingesetzt, mit der die Meßsonde 14 zwischen den Anschlüssen 30 und 32 beaufschlagt wird. Je nachdem, ob über die Detektorspannung U_{D} signalisiert wird, daß sich das Kraftstoff-Luft-Gemisch im fetten oder mageren Bereich befindet, ist die Pumpspannung U_{P} negativ oder positiv, so daß die Elektrode 24 entweder als Kathode oder Anode geschaltet ist. Entsprechend stellt sich ein Pumpstrom I_{P} ein, der über eine Meßeinrichtung 34 meßbar ist. Mit Hilfe des Pumpstroms I_{P} werden entweder Sauerstoffionen von der Elektrode 24 zur Elektrode 26 oder umgekehrt gepumpt. Bei einem stöchiometrischen Kraftstoff-Luft-Gemisch, also wenn die Detektorspannung U_{D} im Sprungpunkt liegt, ist die Pumpspannung nahe 0, so daß kein Pumpstrom I_{P} fließt. Der mit der Meßeinrichtung 34 erfaßte Pumpstrom I_{P} dient in hier nicht näher zu betrachtender Weise zur Ansteuerung einer Einrichtung zur Einstellung des Kraftstoff-Luft-Gemisches, mit dem die Verbrennungskraftmaschine betrieben wird.

In der Figur 2 ist eine Schaltungsanordnung 36 gezeigt, an die der Meßfühler 10 angeschlossen ist. Gleiche Teile wie in Figur 1 sind mit gleichen Bezugszeichen versehen und hier nicht nochmals erläutert. Die Schaltungsanordnung 36 besitzt einen ersten Eingang 38, der mit dem Anschluß 22 des Meßfühlers 10 verbunden ist. Ein zweiter Eingang 40 der Schaltungsanordnung 36 ist mit dem Anschluß 30 des Meßfühlers 10 verbunden. Der Anschluß 32 des Meßfühlers 10 ist mit einem dritten Eingang 42 der Schaltungsanordnung 36 verbunden, der an Masse liegt. Die Schaltungsanordnung 36 besitzt einen als Operationsverstärker ausgebildeten Impedanzwandler 44, dessen Eingang mit dem ersten Eingang 38 der Schaltungsanordnung 36 verbunden ist. Ein Ausgang des Impedanzwandlers 44 ist mit einem ersten Eingang 46 eines Addierers 48 verbunden. Ein zweiter Eingang 50 des Addierers 48 ist mit einer Konstant-Spannungsquelle 52 verbunden, die im gezeigten Beispiel eine Spannung von 500 mV besitzt. Ein Ausgang 54 des Addierers 48 ist mit einem Eingang 56 eines als Operationsverstärker ausgebildeten Verstärkers 58 verbunden. Der Verstärker 58 ist beispielsweise als Zweifachverstärker ausgebildet. Ein Ausgang 60 des Verstärkers 58 ist mit dem zweiten Eingang 40 der Schaltungsanordnung 36 und damit mit dem Anschluß 30 des Meßfühlers 10 verbunden.

Die in Figur 2 gezeigte Schaltungsanordnung 36 übt folgende Funktion aus:

An den Eingängen 38 und 42 der Schaltungsanordnung 36 liegt die Detektorspannung U_{D} an. Diese wird über den Impedanzwandler 44 geführt, auf den nach einer weiteren Ausführungsvariante auch verzichtet werden kann, der eine Anpassung des Widerstandes an eine niederfrequente Signalverarbeitung vornimmt. Die Detektorspannung U_{D} liegt nunmehr an dem ersten Eingang 46 des Addierers 48 an, an dessen zweiten Eingang die Konstantspannung von 500 mV anliegt. Am Ausgang 54 des Addierers 48 liegt somit eine um einen Wert von 500 mV aufaddierte Detektorspannung U_{D} an. Diese wird über den Eingang 56 dem Verstärker 58 zugeführt, der einen Verstärkungsfaktor von 2 besitzt, so daß am Ausgang 60 des Verstärkers 58 eine zweifach verstärkte, zuvor um 500 mV aufaddierte Detektorspannung U_{D} anliegt. Diese liegt nunmehr direkt, das heißt ohne weitere Beeinflussung, an den Anschlüssen 32 und 30 des Meßfühlers 10 als Pumpspannung U_{P} an. Durch diese einfache Verarbeitung der Detektorspannung U_{D} wird erreicht, daß die Pumpspannung U_{P} entsprechend dem Verlauf der Detektorspannung U_{D} geregelt wird, so daß aus dem Verlauf der Detektorspannung U_{D} ein für die Pumpspannung U_{P} optimales Signal erhalten wird. Durch die Aufaddierung der 500 mV auf die Detektorspannung U_{D} wird gewährleistet, daß die Pumpspannung U_{P} im fetten Bereich negativ ist, so daß ein anodischer Grenzstrom über die Meßsonde 14 fließt und im mageren Bereich positiv ist, so daß ein kathodischer Grenzstrom über die Meßsonde 14 fließt. In dem Bereich, in dem die Detektorspannung U_{D} in ihrem Sprungpunkt liegt, also bei einem λ-Wert von 1, liegt die Pumpspannung U_{P} nahe bei 0, so daß kein Pumpstrom I_{P} fließt.

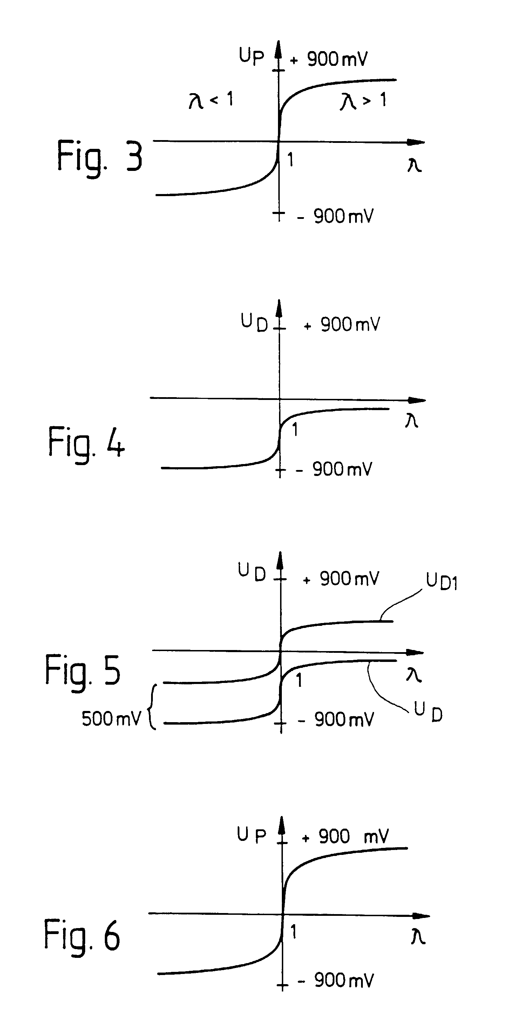

Anhand der Figuren 3 bis 6 werden nachfolgend die einzelnen Spannungsverläufe nochmals verdeutlicht.

In der Figur 3 wird der benötigte Spannungsverlauf der Pumpspannung U_{P} gezeigt. Hierbei soll die Pumpspannung U_{P} im fetten Bereich negativ und im mageren Bereich positiv sein, so daß einerseits ein anodischer Grenzstrom und andererseits ein kathodischer Grenzstrom I_{P} fließt. Bei einem λ-Wert gleich 1 ist die Pumpspannung U_{P} nahe dem Bereich 0, so daß kein Strom I_{P} fließt.

In der Figur 4 ist der mit der Referenzsonde 12 detektierte Spannungsverlauf der Detektorspannung U_{D} gezeigt. Diese liegt aufgrund des konstanten kathodischen Stromes I vollkommen im negativen Bereich, wobei der Spannungsverlauf den gemessenen Sauerstoffkonzentrationsunterschied an der Referenzsonde 12 wiedergibt. Im fetten Bereich, also bei einem Sauerstoffmangel in dem zu messenden Gasgemisch beziehungsweise Abgas, ist das Signal der Detektorspannung U_{D} geringer als im mageren Bereich, bei dem ein Sauerstoffüberschuß vorhanden ist.

Anhand der Figur 5 wird die Wirkungsweise des Addierers 48 der Schaltungsanordnung 36 verdeutlicht. Zu der Detektionsspannung U_{D} wird der Konstantspannungswert von 500 mV aufaddiert, so daß eine Spannungskurve U_{D1} am Ausgang 54 des Addierers 48 beziehungsweise Eingang 56 des Verstärkers 58 anliegt. Diese Spannung U_{D1} wird mit Hilfe des Verstärkers 58 zweifach verstärkt, so daß sich der in Figur 6 gezeigte Spannungsverlauf ergibt, der dem benötigten - bereits in Figur 3 dargestellten - Verlauf der Pumpspannung Up entspricht. Dieser liegt nunmehr durch einfache Aufaddierung eines Konstantspannungswertes und anschließende Verstärkung im fetten Bereich negativ und im mageren Bereich positiv. Im Übergangsbereich zwischen dem fetten und dem mageren Bereich liegt die Pumpspannung U_{P} - wie gewünscht - nahe bei 0, so daß kein Pumpstrom I_{P} fließt. Es wird deutlich, daß in einfacher Weise aus dem Spannungsverlauf der Detektionsspannung U_{D} der Verlauf der Pumpspannung U_{P} entnommen werden kann.

## Patentansprüche

1. Verfahren zum Ansteuern eines Meßfühlers zum Bestimmen einer Sauerstoffkonzentration in einem Gasgemisch, insbesondere in Abgasen von Verbrennungskraftmaschinen, wobei eine der Sauerstoffkonzentration entsprechende, von einer Referenzsonde celieferte Detektorspannung von einer Schaltungsanordnung in eine Pumpspannung für eine Meßsonde transferiert wird, und wobei der Verlauf der Detektorspannung (UD) unmittelbar zur Bestimmung des Verlaufs der Pumpspannung (UP) eingesetzt wird, dadurch gekennzeichnet, daß der Detektorspannung (U_{D}) ein Spannungswert aufaddiert wird, der eine Verschiebung der Detektorspannung (U_{D}) derart bewirkt, daß ein Sprungpunkt der Detektorspannung nahe dem Nullpunkt liegt, daß die aufaddierte Detektorspannung (U_{D}) verstärkt wird, und daß die aufaddierte und verstärkte Detektorspannung (U_{D}) als Pumpspannung (U_{P}) eingesetzt wird.

2. Verfahren nach Anspruch 1, **dadurch gekennzeichnet,** daß der feste aufzuaddierende Spannungswert 500 mV beträgt.

3. Verfahren nach einem der vorhergehenden Ansprüche, **dadurch gekennzeichnet,** daß die Verstärkung der aufaddierten Detektorspannung (U_{D1}) um den Faktor 2 erfolgt.

4. Schaltungsanordnung zum Ansteuern eines Meßfühlers zum Bestimmen einer Sauerstoffkonzentration in einem Gasgemisch, insbesondere im Abgas von Verbrennungskraftmaschinen, mit einem ersten Eingang, der mit einer ersten Elektrode einer Referenzsonde verbunden ist, einem zweiten Eingang, der mit einer ersten Elektrode einer Meßsonde verbunden ist und einem an Masse liegenden dritten Eingang, der mit den zweiten Elektroden der Referenzsonde und der Meßsonde verbunden ist, wobei zwischen dem ersten und dritten Eingang eine Detektorspannung der Referenzsonde anliegt und zwischen dem zweiten und dritten Eingang eine Pumpspannung für die Meßsonde geliefert wird, dadurch gekennzeichnet, daß der erste Eingang (38) mit einem ersten Eingang (46) eines Addierers (48) verbunden ist, an dessen zweitem Eingang (50) eine Additionsspannung anliegt und dessen Ausgang (54) über einen Verstärker (58) mit dem zweiten Eingang (40) der Schaltungsanordnung verbunden ist.

5. Schaltungsanordnung nach Anspruch 4, **dadurch gekennzeichnet,** daß zwischen dem ersten Eingang (38) der Schaltungsanordnung (36) und dem ersten Eingang (46) des Addierers (48) ein Impedanzwandler (44) geschaltet ist.

6. Schaltungsanordnung nach einem der vorhergehenden Ansprüche, **dadurch gekennzeichnet,** daß der Verstärker (58) ein Zweifachverstärker ist.

## Claims

1. Method for driving a measurement sensor for determining an oxygen concentration in a gas mixture, in particular in exhaust gases of internal combustion engines, a detector voltage which corresponds to the oxygen concentration and is supplied by a reference probe being transferred by a circuit arrangement into a pump voltage for a measurement probe, and the profile of the detector voltage (UD) being used directly to determine the profile of the pump voltage (UP), characterized in that the detector voltage (U_{D}) has added to it a voltage value which effects a shift in the detector voltage (U_{D}) in such a way that a transition point of the detector voltage lies near the zero point, in that the detector voltage (U_{D}) which has been added to is amplified, and in that the detector voltage (U_{D}) which has been added to and amplified is used as the pump voltage (Uₚ).

2. Method according to Claim 1, characterized in that the fixed voltage value to be added is 500 mV.

3. Method according to one of the preceding claims, characterized in that the detector voltage (U_{D1}), produced by addition, is amplified by the factor 2.

4. Circuit arrangement for driving a measurement sensor for determining an oxygen concentration in a gas mixture, in particular in the exhaust gas of internal combustion engines, having a first input which is connected to a first electrode of a reference probe, having a second input which is connected to a first electrode of a measurement probe, and having a third input which is connected to earth and to the second electrodes of the reference probe and of the measurement probe, a detector voltage of the reference probe being present between the first and third inputs and a pump voltage for the measurement probe being supplied between the second and third inputs, characterized in that the first input (38) is connected to a first input (46) of an adder (48), at whose second input (50) an addition voltage is present and whose output (54) is connected via an amplifier (58) to the second input (40) of the circuit arrangement.

5. Circuit arrangement according to Claim 4, characterized in that an impedance converter (44) is connected between the first input (38) of the circuit arrangement (36) and the first input (46) of the adder (48).

6. Circuit arrangement according to one of the preceding claims, characterized in that the amplifier (58) is a double amplifier.

## Revendications

1. Procédé de commande d'un capteur de mesure pour déterminer la concentration en oxygène d'un mélange gazeux notamment des gaz d'échappement de moteurs à combustion interne,
selon lequel on transfère une tension de détection fournie par une sonde de référence et correspondant à la concentration en oxygène, d'un circuit en une tension de pompage pour une sonde de mesure et
on utilise directement la courbe de la tension de détection (U_{D}) pour déterminer la courbe de la tension de pompage (U_{P}),
caractérisé en ce qu'
on additionne une tension à la tension de détection (U_{D}), pour décaler la tension de détection (U_{D}) pour avoir un saut de la tension de détection voisin du point zéro,
on amplifie la tension de détection (U_{D}) ainsi augmentée et
on utilise la tension de détection (U_{D}) augmentée et amplifiée, comme tension de pompage (Uₚ).

2. Procédé selon la revendication 1,
caractérisé en ce que
la tension fixe, additionnée est égale à 500 mV.

3. Procédé selon l'une des revendications précédentes,
caractérisé en ce que
l'amplification de la tension de détection (U_{D1}), augmentée est faite avec un coefficient d'amplification égal à 2.

4. Circuit pour commander un capteur de mesure servant à déterminer une concentration en oxygène d'un mélange gazeux notamment des gaz d'échappement de moteurs à combustion interne comprenant
une première entrée reliée à une première électrode d'une sonde de référence,
une seconde entrée reliée à une première électrode d'une sonde de mesure et
une troisième entrée reliée à la masse, celle-ci étant également reliée à la seconde électrode de la sonde de référence et de la sonde de mesure,
et entre la première et la troisième entrée, on a une tension de détection de la sonde de référence et entre la seconde et la troisième entrée, on a une tension de pompage de la sonde de mesure,
caractérisé en ce que
la première entrée (38) est reliée à une première entrée (46) d'un additionneur (48) dont la seconde entrée (50) reçoit une tension d'addition et dont la sortie (54) est reliée par un amplificateur (58) à la seconde entrée (40) du circuit.

5. Circuit selon la revendication 4,
caractérisé par
un convertisseur d'impédance (44) prévu entre la première entrée (38) du circuit (36) et la première entrée (46) de l'additionneur (48).

6. Circuit selon l'une quelconque des revendications précédentes,
caractérisé en ce que
l'amplificateur (58) est un amplificateur à coefficient d'amplification égal à 2.
